(19) Europäisches Patentamt
European Patent Office
Office européen des brevets

(11) Publication number: **0 063 930**
**B1**

(12) **EUROPEAN PATENT SPECIFICATION**

(45) Date of publication of patent specification: **23.10.85**

(51) Int. Cl.$^4$: **C 08 G 18/18,** C 08 G 18/14

(21) Application number: **82302082.1**

(22) Date of filing: **23.04.82**

# (54) Polyurethane foam.

(30) Priority: **25.04.81 GB 8112824**

(43) Date of publication of application:
**03.11.82 Bulletin 82/44**

(45) Publication of the grant of the patent:
**23.10.85 Bulletin 85/43**

(84) Designated Contracting States:
**AT BE CH DE FR GB IT LI LU NL SE**

(56) References cited:
**GB-A-1 541 593**
**US-A-3 010 963**
**US-A-3 980 594**
**US-A-4 148 980**
**US-A-4 186 255**

(73) Proprietor: **BP Chemicals Limited**
**Belgrave House 76 Buckingham Palace Road**
**London, SW1W 0SU (GB)**

(72) Inventor: **Gusthiot, Andre**
**15 ter Rue Boudines**
**CH-1217 Meyrin (CH)**
Inventor: **Pham, Tu**
**Chemin de la Traille 4**
**CH-1213 Onex (CH)**
Inventor: **Ritsema van Eck, Reinoud**
**Route de Chiblins**
**CH-1261 Cheserex (CH)**

(74) Representative: **Ryan, Edward Terrence et al**
**c/o The British Petroleum Company plc Patents Division Chertsey Road**
**Sunbury-on-Thames Middlesex, TW16 7LN (GB)**

EP 0 063 930 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for the production of high resilience flexible polyurethane foams.

Flexible polyurethane foams made by the reaction of a polyol and an isocyanate in the presence of water as a blowing agent have been known for many years. The polyurethane foams initially on the market had comparatively low resilience and for some purposes it was desirable to supply foams having a greater resilience. Foams with higher resilience are particularly suitable for such purposes as upholstery for example in furniture and in car seats as higher resilience gives greater comfort. Methods of making higher resilience foam were subsequently found. The resulting formulations made use of selected surfactants and catalyst combinations together with other ingredients. Methods of making high resilience (HR) foam are well known to those skilled in the art.

Polyurethane foams may be made by the reaction of polyols and polyisocyanates. Polyols may be prepared in which the hydroxy groups are predominantly secondary hydroxy groups. Examples of such polyols are those which are made exclusively from the reaction of propylene oxide with a suitable polyhydric starter. Polyols may also be made which contain a substantial proportion of primary hydroxy groups. Such polyols may be made, for example, by the reaction of propylene oxide with a suitable polyhydric starter followed by reaction with ethylene oxide so as to give a product in which at least a substantial proportion of the hydroxy groups finally present are primary hydroxy groups. This process of adding ethylene oxide to introduce primary hydroxyl groups is sometimes known as "end-capping".

The introduction of primary hydroxy groups increases the reactivity of the polyols. The reactivity of the polyol is important not only to obtain production of the foam in a short time but also because polyol reactivity affects the balance between the competing reactions involved in polyurethane foam formation. In polyurethane foam production using water as a blowing agent the isocyanate reacts with the polyol to form urethane linkages. It also reacts with water to produce $CO_2$ gas which acts as a blowing agent. The relative rates at which these two reactions proceed is important.

The nature of the isocyanate used is also important. The main polyisocyanates used commercially are a mixture of the 2,4 and 2,6 isomers of toluene diisocyanates (known as TDI) and/or a mixture of polyphenylene polymethylene isocyanates made by condensing aniline with formaldehyde and converting the amine groups to isocyanate (this mixture is known as crude MDI). Both TDI and crude MDI can be used in the production of HR foams.

Because of the problems of ensuring that the various reactions taking place during the foaming process proceed at rates which give satisfactory foam those skilled in the art of making HR foams have believed that it was essential to use combinations of catalyst for satisfactory results. An example of a frequently used combination is a tertiary amine and a tin catalyst.

It is true that patents have been published which suggest that a single catalyst can be used to make polyurethane foams. However we are not aware that a satisfactory high resilience foam has previously been made using a single catalyst.

Clearly the use of two catalysts or initiators is likely to increase the complication and expense of the foaming process. Despite this all the commercially available high resilience foam formulations of which we are aware use a combination of catalysts. This is a clear demonstration of the belief of those skilled in the art that a combination of catalysts was necessary to obtain commercially acceptable results.

GB—A—1 487 026 discloses the production of polyurethanes in which isocyanates are wholly or partially polymerised into other forms e.g. trimers (isocyanurates), which are then subsequently reacted with polyols to yield polyurethanes. However it is difficult to control such isocyanate polymerisations so as to prevent an excessive degree of polymerisation. The isocyanate polymerisation step in GB—A—1 487 026 is carried out shortly before the foaming step. This represents an additional complication for the manufacturer of the foam, who prefers to mix together the components of the foam formulation in a single step without the necessity of carrying out any reaction steps prior to foaming.

It is disclosed in GB—A—1 498 506 that flexible polyurethane foams may be made by the reaction of polyols and isocyanates in the presence of certain defined isocyanate trimerisation catalysts. The foams are said to have high resilience and good flame retardancy. It is stated in the specification that when the trimerisation catalysts are used other catalysts are not necessary. Examples I to XIII show the preparation of polyurethane foams by the reaction of capped polyols (i.e. having primary hydroxy groups present), an isocyanate and a trimerisation catalyst. In all these examples N-ethyl morpholine is present which acts as an additional catalyst. Exampe XIV shows the use of a single catalyst. The isocyanate is a mixture of TDI with polymethylene polyphenylene isocyanate (e.g. MDI). The catalyst used was triethylene diamine dissolved in dipropylene glycol. No physical results are given for the foam. The man skilled in preparing HR foams would expect such a catalyst to give unsatisfactory results when used alone and he would expect results which were yet more unsatisfactory if he attempted to use TDI undiluted with MDI as in Example I-XII. We have in fact found that when Example XIV is repeated satisfactory high resilience foams cannot be produced using triethylene diamine as the sole catalyst.

GB—A—1 339 441 discloses the production of a flexible polyurethane foam which are said to have

reduced inflammability. The specification contains examples showing the use of various catalysts used alone among which is included an alkylammonium compound, benzyl trimethyl ammonium phenoxide. We duplicated Example 12 of GB—A—1 339 441 and found that a shrinking foam of low resilience which does not pass the smouldering test of British Standard BS 5852 Part 1 is produced.

GB—A—1 390 702 also discloses the production of a polyurethane foam which is said to have a high resilience by using a specific isocyanate trimerisation catalyst namely an s-triazine. In Examples I to III the s-triazine is used in combination with N-ethyl morpholine which will itself have a catalytic activity. Example IV shows the use of a single catalyst in conjunction with crude TDI. No physical test results are given which would show that HR foam is in fact formed and unlike Example I to III there is no allegation that high resilient foams are formed. There is again nothing here which would show the man skilled in making foams that the belief in the necessity for catalyst combination was incorrect. There would again be no incentive for using other catalysts alone. We have duplicated Example 4 of this patent. We obtained a foam which shrunk on curing and had an extremely long curing time, which could not be accelerated by increasing the catalyst level.

GB—A—1 396 513 shows the production of foams from a mixture containing only a single catalyst namely sodium carbonate. The foams are semi-flexible foams of low resilience. Even though the use of sodium carbonate alone is disclosed the desirability of using co-catalysts is mentioned. Sodium carbonate alone is completely unsatisfactory for making high resilience foam. The activity of the catalyst was low, and the foam formation reaction was very slow. The reaction velocity could not be increased by increasing the catalyst level because the solubility of the catalyst was limited.

Among a list of catalysts mentioned are quaternary ammonium bases in particular tetramethylammonium and tetraethylammonium hydroxides. There is again nothing to suggest satisfactory HR foams can be made using a single catalyst. We have found that when tetramethylammonium or tetraethylammonium hydroxides are used as catalysts in the production of polyurethane foam the catalytic effect is due solely to the alkalinity of the compounds. An equivalent quantity of KOH has the same effect. The curing reaction is very slow and tetramethylammonium hydroxides and tetraethylammonium hydroxides are not suitable catalysts for the production of high resilience foams.

A number of patent specifications which describe the production of foams having a high degree of resilience mention catalysts which are nitrogen-containing bases, eg tetraalkylammonium hydroxides. Tetraalkylammonium hydroxides are mentioned in lists of catalyst often given in a standard form in a number of patent specifications. Examples of such specifications are GB—A—1360131 (=DE 2110055), GB—A—1381571 (=DE 2221811 and DE 2232525), GB—A—1396513, and GB—A—1517676 (=DE 2607988). However the use of tetraalkylammonium hydroxides is not disclosed in the Examples of these patent specifications. No one skilled in production of high resilience polyurethane foams would believe that tetramethylammonium hydroxides or any other tetraalkylammonium compound could be used alone to give a satisfactory high resilience polyurethane foam. As has already been indicated above persons skilled in the manufacture of high resilience foam who attempted to repeat the specific examples in earlier patents showing the use of single catalysts as opposed to mixed catalyst systems would find that such single catalyst gave unsatisfactory results. Persons skilled in making high resilience foam who had been unsuccessful in obtaining satisfactory results with a single catalyst when the use of such catalysts is specifically described would see even less reason to believe that a class of compounds listed at end of a long list of catalysts and whose use was not exemplified, could be used alone to give high resilience foams, particularly when the most readily available members of the class, tetramethylammonium and tetraethylammonium hydroxide are unsatisfactory.

GB—A—1 586 595 discloses a special catalyst for isocyanate reactions, which is an ar-sulphonium arene oxide. This is a zwitterion and is thus different from the catalysts which are normally used commercially for isocyanate reactions such as polyurethane manufacture. The specification states the zwitterion can be used as the sole initiator in the preparation of flexible polyurethane foams, which have previously required a catalyst system having at least two components. The examples showing the production of non-rigid polyurethane foam, all produce foam in a pre-heated mould, and curing is carried out in an oven. GB—A—1 586 595 contains one example showing a one-shot or one step process in which all the ingredients are reacted together simultaneously. This uses 10 parts of catalyst per 100 parts of polyol, which is an extremely high level of catalyst, particularly when curing in an oven is used. As catalysts are normally expensive this is quite uneconomic. This patent teaches persons skilled in polyurethane foam that they should use at least two catalysts unless they wish to make an oven cured foam using excessive amounts of a catalyst of very special structure, which is not commercially available.

The use of quaternary ammonium bases is well-known in the production of urethane-modified polyisocyanurate rigid foams from isocyanates and polyols. However the formulations used for rigid foams are totally different from those used in high resilience foams and persons skilled in the production of high resilience foam would see no reason to believe that materials recommended for use with rigid

foams would be satisfactory for the production of high resilience foams.

Thus GB—A—1 541 593 discloses a catalyst suitable for the production of rigid foams. Most of the examples show the production of rigid foams. GB—A—1 541 593 discloses in Example 23 the production of a flexible foam using certain quaternary ammonium compounds. However the formulation used also contains an additional catalyst namely stannous octoate. The polyol used is derived from propylene oxide and therefore contains secondary hydroxy groups. The person skilled in making HR foams would not expect to obtain a satisfactory HR foam from this formulation and he would certainly see no reason to believe that a satisfactory foam could be obtained by omitting the stannous octoate catalyst. In fact when Example 23 is repeated it is found that the foam produced is completely unsatisfactory as a commercial foam. Catalysts made in accordance with GB—A—1 541 593 are commercially available. The manufacturer sells them as being suitable for the manufacture of rigid foam but does not promote their use as catalysts for flexible foams.

We have now surprisingly found that by selecting a specific class of known trimerisation catalyst satisfactory high resilience flexible foam may be made from polyols containing substantial quantities of primary hydroxy groups and from isocyanates containing a substantial amount of toluene diisocyanate isomers by the use of a single catalyst. Further we have found that these foams have good hardness/density ratio and fire-resistant properties. It is becoming increasingly important for high resilience foam to have good fire resistant properties. Much high resilient form is used in upholstery and in addition to the risk of the foam igniting when exposed to an open flame there is concern about the smouldering mode of combustion induced by a smouldering cigarette. This mode of combustion proceeds for a long time increasing steadily in extent and releasing smoke and fumes. The foam may finally burst into flames.

It is possible to increase the resistance of a polyurethane foam to ignition by an applied flame if various additives are incorporated into the foam. These additives however often have no effect on the foam's propensity for self-sustained smouldering in the United Kingdom furniture made from foam which does not pass a standard smouldering test must carry a label stating this fact. The provision of smoulder-resistant foam is therefore a matter of great importance. An important advantage of the present invention is that it provides a means of obtaining foams with reduced tendency to undergo the self-sustaining smouldering mode of combustion when tested by British Standard BS 5852 Part 1.

Accordingly, the present invention provides a process for the production of a high resilience polyurethane foam by the reaction of a polyol containing primary hydroxy groups and an isocyanate, containing a substantial proportion of isomers of toluene isocyanate, in the presence of water and a silicone surfactant which is carried out in the presence, as sole effective catalyst, of a quaternary ammonium carboxylate derivative of a trialkylamine quaternised by a hydroxyalkyl group.

The present invention is concerned with the production of high resilience polyurethane foams. For the purposes of this specification a polyurethane foam is considered to be a high resilience foam if it has a resilience as measured by the ball rebound test of 50% minimum in ASTMS D 3574 Test II. High resilience polyurethane foams have properties which closely approach those of rubber latex foams. If a high resilience foam is subjected to a load which is increased to a maximum and then decreased and the results are plotted on a graph a characteristic hysterisis curve is obtained. The foams of the present invention in addition to the 50% ball rebound test, preferably have a stress strain curve which does not show a plateau and the quotient of compression hardness at 65% and 25% deformation is preferably more than 2.0.

The polyol

The polyol is preferably one in which at least 10% of the hydroxyl groups are primary hydroxy groups. The person skilled in making high resilience foams will have no difficulty in selecting suitable polyols for use in making high resilience foams in accordance with the present invention.

In producing cellular urethane polymers the reaction mixture or foam formulation contains an active hydrogen-containing organic compound having an average of at least two and usually not more than six active hydrogen atoms present as hydroxyl groups. Such organic polyol reactants include compounds consisting of carbon, hydrogen and oxygen as well as compounds which contain these elements in combination with phosphorus, halogen and/or nitrogen. Suitable classes or organic polyol reactants for use in the method of this invention are polyether polyols, polyester polyols, polylactone polyols, nitrogen-containing polyols, phosphorus-containing polyols, phenolic-based polyols, and polymer/polyols produced by polymerising an ethylenically unsaturated monomer in one of the aforesaid polyols in the presence of a free radical initiator, or reacting isocyanates with primary and/or secondary amino groups containing polyamines and/or hydrazines in presence of above mentioned polyols, as described in DE—A—25 19 004 (4.11.76).

It is well known to the polyurethane art that the particular polyol reactant or combination of polyols employed depends upon the end-use of the polyurethane product.

For this purpose the polyol is usually characterised by its hydroxyl number which is determined by and defined as the number of milligrams potassium hydroxide required for the complete neutralisation of the hydrolysis product

prepared by esterifying and then hydrolysing 1 g of polyol or mixture of polyols. The hydroxyl number is also defined by the following equation which reflects its relationship with the functionality and molecular weight of the polyol.

$$OH=\frac{56.1\times 1000\times f.}{M.W.}$$

OH=hydroxyl number of polyol
f=average functionality, that is, average number of hydroxyl groups per molecule of polyol
M.W=average molecular weight of the polyol.

Examples of preferred polyols are those in which at least 40 weight percent of the total polyol content is constituted of a polyether triol having the following additional characteristics: (a) an average primary hydroxyl content of at least 40 mole percent (or no more than 60 mole percent of the less reactive secondary hydroxyl groups); and (b) an average molecular weight of from 2000 to about 8000. Preferably, such polyether triols for use as components of high-resilience formulations contain from about 60 to about 90 mole percent of primary hydroxyl groups and have an average molecular weight of from 4000 to 7000. Consistent with their trifunctionality and the aforesaid respective ranges of molecular weights, such polyether triols have hydroxyl numbers from 84 to 21, preferably from 42 to 24. These highly reactive polyether triols are provided by oxyalkylation of one of the aforesaid trihydric starters such as glycerol, with propylene oxide and ethylene oxide. Usually, the total ethylene oxide content of the polyether triols is between about 7 and about 20 weight percent, expressed on the basis of total alkylene oxide fed during the oxyalkylation reaction. The high primary hydroxyl content is introduced by capping of the polyoxyalkylene chains with at least a portion of the total ethylene oxide feed.

In providing high resilience foams, the polyether triols may be used as essentially the sole type of polyol in the formulation or they may be employed in combination with other polyols to control the degree of softness or firmness of the foam to vary the load bearing properties.

In particular the polyol used may contain finely dispersed organic or inorganic materials to provide improved load bearing properties. Examples of such polyols are those prepared by polymerising ethylenically unsaturated monomers e.g. acrylonitrile and or styrene with a polyether polyol. The polyether polyol in which the polymerisation takes place preferably has the charactersitics indicated as preferred for polyether triols above.

The products obtained by polymerising ethylenically unsaturated monomers in polyether polyols are frequently known as polymer polyols.

It is particularly preferred to use polyether polyols which do not contain any substantial amount of dispersed or dissolved polyureas.

Polyether polyols containing dispersed or dissolved polyureas are described in several patents e.g. German Offenlegungschrift 2519004. The use of such polyurea polyols in the process of the present invention will give foams having useful mechanical properties. We believe, however, that such foams will have an increased tendency for self-sustaining smouldering combustion when compared with foams made from simple polyether polyols or polymer polyols made by polymerisation of ethylenically unsaturated monomers.

The polyisocyanate

The polyisocyanate must contain a substantial proportion of isomers of toluene diisocyanates. Process for producing toluene diisocyanates can be carried out so as to yield a crude undistilled mixture of products sold as 'crude TDI'. The crude TDI may be subjected to distillation and the product resulting from the distillation treatment is sold as 'TDI' or 'pure TDI'. However the commercial 'pure TDI' will still contain some proportion of impurities and will generally consist of a mixture of 2,4- and 2,6-isomers of toluene diisocyanate.

If another polyisocyanate is present it may be a polymethylene polyphenylene diisocyanate. Mixtures containing polymethylene polyphenylene diisocyanate may be produced by the reaction of aniline with formaldehyde with subsequent conversion of the amine groups to isocyanate groups. Such mixtures are commercially available under the name MDI.

Thus the polyisocyanate used may be a mixture of 80% of TDI and 20% MDI by weight.

The polyisocyanate may contain polymers of toluene diisocyanates which have been prepared by a polymerisation (eg trimerisation) step separate from the foaming step. However such a separate polymerisation step represents an additional complication. Manufacturers of polyurethane foam prefer to use the TDI or MDI or mixtures thereof in the manufacture of polyurethane foams as these are readily available commercial materials. It is inconvenient to store and handle additional special types of polyisocyanate. It is therefore particularly preferred to use polyisocyanates which have not been subjected to a separate polymerisation step.

It is highly desirable for the TDI whether 'crude' or 'pure' of the polyisocyanate used to be at least 50% by weight of the total polyisocyanate. Preferably the polyisocyanate is at least 70% TDI and more preferably at least 85% TDI and most preferably it is substantially all TDI.

The isocyanate index calculated on the isocyanate introduced into the reaction mixture (i.e. disregarding any reactions which may take place between the isocyanate molecules prior to the reaction with the polyol) is preferably within the range 80 to 160, more preferably within the range 110—150, most preferably 110—140.

The isocyanate index is the amount of isocyanate used divided by the theoretically required

stoichiometric amount of isocyanate multiplied by one hundred.

The surfactant

The optimum silicone surfactants for use in the process of the present invention can readily be selected by those skilled in the production of high resilience foam. Examples of suitable surfactants are those described in US 3 741 917 i.e. siloxane block copolymers having a molecular weight from about 500 to about 2500 a siloxane content from about 40 to about 70% weight per cent based on the weight of the copolymer and an oxyethylene content of at least 35% weight based on the total amount of any oxyalkylene groups present in said copolymer. The copolymers have the formula:

$$R_2SiO(R_2SiO)_n[R''O(C_nH_{2n}O)_bC_xH_{2x}O_z\overset{R}{Si}—O]_ySiR_3$$

wherein z is 0 or 1, n is 2 to 7 inclusive, y is 1 to 6 inclusive, a is 2 to 4 inclusive b is 0 to 10 inclusive, R'' is alkyl, aryl, aralkyl acyl, carbamyl, or carbonate, and R is a monovalent hydrocarbon radical.

Examples of other suitable surfactants are those disclosed in GB A 1 554 291.

The optimum quantity of surfactant for use in the process of the present invention can be readily determined on the basis of simple tests but may for example be 0.2% to 0.8% by weight of the mixture to be foamed e.g. 0.53%.

Water

The quantity of water depends on the density aimed at. It may for example be as low as 0.33% by weight based on the total weight of mixture to be foamed. The lower limit is more preferably 0.66% by weight. The upper limit may for example be 5% by weight, preferably 4% by weight. Thus the water may be in the range 0.33 to 3% in particular 0.66% to 2.6% by weight.

The catalyst

The process is carried out in the presence of a single effective catalyst. We have found that unsatisfactory results are obtained if attempts are made to carry out the process by the known technique using effective amounts of two catalysts.

The catalyst used in the process of the present invention is a quaternary ammonium carboxylate derivative of a trialkylamine, which trialkylamine contains no reactive hydroxyl groups.

The quaternary ammonium compound is most preferably one which thermally decomposes at temperatures below 100°C, more preferably below 90°C to yield the trialkylamine. The quaternary ammonium compound preferably does not decompose below 50°C. The trialkylamines are therefore most preferably low molecular weight trialkylamines, preferably containing 1 to 3 carbon atoms in each alkyl group.

Particularly preferred trialkylamines are trimethylamine and triethylamine. Trimethylamine is the most preferred trialkylamine.

The formation of the trialkylamine takes place as a result of the elimination of the fourth group linked to nitrogen in the original quaternary ammonium compound. This fourth group is hereinafter referred to as the eliminated group.

The eliminated group linked to the nitrogen in the quaternary ammonium ion is one which enables the quaternary ammonium ion to decompose at a temperature below 100°C.

The eliminated group is a hydroxyalkyl group, preferably one which carries the hydroxyl group on the beta-carbon atom (where the alpha-carbon atom is the atom linked to the nitrogen). Suitable quaternary ammonium compounds may be made by the reaction of an alkylene oxide (e.g. ethylene oxide, propylene oxide) with the trialkyl amine.

Examples of suitable carboxylates are those derived from a carboxylic acid having 2 to 20 carbon atoms in the molecule. The carboxylic acid may be an aromatic acid, or may be an aralkanoic or alkenoic acid. It is preferably an alkanoic acid. Examples of a suitable alkanoic acid are those containing from 5 to 12 carbon atoms in the molecule, which may be straight chain or branched. An example of a suitable carboxylate moiety is 2-ethyl hexanoate.

The quantity of quaternary ammonium compounds employed in the process of the present invention may vary over a moderately wide range for example from 0.33% to 3% preferably 0.53% to 2.0% in particular 0.53% to 1.6%, based on weight of polyol.

Other ingredients

Other ingredients may be optionally present in the foaming process. Thus an additional blowing agent may be present for example a low boiling liquid such as a fluorocarbon.

A cross linker may also optionally be present. Cross-linkers suitable for the production of high resilience foam will be well known to those skilled in high resilience foam technology and examples of suitable cross-linkers are glycerol, triethanolamine, diethanolamine, and low molecular weight polyether polyols for example those having a molecular weight up to 400.

Chain extenders may also be present. Examples of suitable ones are polyether glycols of low molecular weight; or any low molecular compound having two hydrogens which react with isocyanate.

Flame retardant additives may also be present if desired. Examples of such flame retardant additives are chloroalkyl phosphates.

The process of the present invention may be used for both moulded foams in which a foamed article is formed in a closed mould and slab-stock foam in which large blocks of foam are produced which are subsequently cut into the desired shape for use. It is preferred to use the process to make slab-stock foam.

High resilience foam is sometimes known as 'cold-pure' foam.

When polyether polyols were first used to make polyurethane foams, the polyols contained a major amount of secondary hydroxyl groups and the application of external heat e.g. from an oven, was required to obtain satisfactory curing. When high resilience foams were introduced based on polyether polyols with a higher primary hydroxyl content, it was found that it was not essential to use external heat to cause the foam to cure. Such foams were sometimes described as 'cold-cure' foams even though the curing reaction is exothermic and the foam becomes warm as the reaction proceeds. It is possible to apply external heat to accelerate the curing of a high resilience foam. This however involves additional equipment and energy costs and it is preferred to make the high resilience foam without making use of external heating.

The invention will now be illustrated by references to the following Examples.

Comparative test A

A polyurethane foam was prepared as described in Example 23 of GB 1 541 593 omitting the stannous octoate (i.e. without co-catalysts).

The foam obtained shrank heavily after foaming was complete, thus making it unsatisfactory for use as a high resilience foam. The resulting foam had a low ball rebound value (less than 40%) in the ball rebound test ASTMS D 3474 Test II, and was thus not a high resilience foam.

Comparative test B

Foams were prepared as in Example 23 of GB 1 541 593, but using a polyol which was terminated by primary hydroxyl groups, and using a co-catalyst as is conventional in making high resilience foam. The co-catalyst was used in an amount of 0.1 parts per hundred parts of polyol. The co-catalysts used were stannous octoate, dibutyl tin dilaurate, N-methyl morpholine and a material sold by Union Carbide Corporation as catalyst NIAX A-1 (bis(2-N,N-dimethylamine ethyl) ether.

In all cases a very fast reaction producing a shrinking foam was obtained, which was not suitable for use as a high resilience foam.

Comparative test C

A foam was prepared using the following formulation:

| | Parts by weight |
|---|---|
| Polyol (a) | 100.0 |
| Flame retardant additive (b) | 2.0 |
| Water | 2.5 |
| Silicone surfactant (c) | 0.8 |
| Polyisocyanate (d) | (sufficient to give an index of 110) |
| Catalyst | |

(a) (A glycerol started polyoxypropylene/polyoxyethylene copolymer, 500 MW, 75% primary OH, 35 OH No.)
(b) TCEP (Tri (β,β-dichloroisopropyl) phosphate).
(c) Cyanopropyl polydimethyl siloxane copolymer.
(d) TDI 80:20 (Tolylene di-isocyanate, blend of the 2.4 and 2.6 isomers (80%:20%) (weight ratio)).

The catalyst used was that used in Example 4 of GB 1 390 702.

A foam was prepared as follows: the polyol, flame retardant additive (optional), water silicone surfactant, and catalyst are thoroughly mixed. Whilst mixing the isocyanate is added and the composition is mixed for 7 seconds, then poured into a paper container and allowed to rise freely.

The foam formation reaction was poorly balanced. Using the quantity of catalyst used in Example 4 of GB 1 390 702 the foam exhibited a very fast rise time followed by a long curing time. Increasing the catalyst level to reduce the curing time made the processability questionable because the cream time was very short when higher catalyst concentrations were used, which increased the risk that foaming would start in the mixing apparatus.

Comparative test D

A foam was prepared as in Comparative Test C using sodium carbonate as catalyst as disclosed in the Example of GB 1 396 513.

It was very difficult to make a foam by this method. It was difficult to dissolve the sodium carbonate. The reaction was very slow and the cream time was 25 seconds. Because of the solubility problems it would not be possible to improve the reaction rate by increasing the concentration of catalyst. The above is not a process which could be used commercially.

Comparative test E

A polyurethane foam was prepared as in Comparative Test C of this specification using the formulation of Example XIV of GB 1 498 506 namely:

| | |
|---|---|
| glycerine-based polyoxypropylene polyol capped with polyoxyethylene groups (parts by weight) | 300 |
| water | 7.5 |
| silicone surfactant | 0.3 |
| catalyst | 5.0 |
| TDI 80:20 (1) | 99 |
| Polymethylene polyphenyl isocyanate (2) | 25 |
| isocyanate index | 130 |

TDI 80:20 was an isomeric mixture of 80% by weight of 2,4- and 20% by weight of 2,6-toluene diisocyanate.

The total isocyanate mixture corresponds to the composition of NIAX isocyanate SF-58.

The catalyst used was a 33% by weight solution of triethylene diamine in dipropylene glycol. This corresponds to the composition of the commercially available catalyst sold as DABCO 33lv.

The silicone surfactant used was a commercially available silicone surfactant as used in Comparative Test C of the present specification. The curing time of the foam was very long. Oven curing would be required for commercial production, which would increase costs. The curing time could not be reduced by increasing the catalyst concentration. In practice a co-catalyst would be required for satisfactory curing.

An attempt was made to repeat the above test using TDI 80:20 without polymethylene polyphenylene isocyanate. The foam collapsed.

Comparative test F

A polyurethane foam was prepared using the Formulation of Test C but using tetramethylammonium hydroxide as sole catalyst.

The foamed cured slowly and curing was still incomplete after 20 to 30 minutes.

Comparative test G

An experiment was carried out as in Comparative Test F but using tetramethylammonium hydroxide as catalyst. The resulting foam cured slowly as in Comparative Test F.

Comparative test H

Example 12 of GB 1 339 441 was duplicated.

The reactivity was excessively fast, and the foam showed pronounced top shrink. The foam was of low resilience and had an unpleasant odour.

It did not pass the smouldering test of BS 5852 Part 1 using an 80:20% by weight viscose:cotton fabric.

Example 1

A polyurethane high resilience foam was prepared from the following formulation.

Formulation I

| | Parts by weight |
|---|---|
| Polyol (a) | 100.0 |
| $H_2O$ | 2.5 |
| Catalyst (b) | 1.0 |
| Diethanolamine | 1.0 |
| Silicone surfactant (c) | 0.8 |
| TDI 80:20 | 41.5 |

(a) glycol started polyoxypropylene/polyoxyethylene copolymer, 5000MW, 75% primary OH, OH No 35

(b) alkylammonium carboxylate salt derived from trimethylamine, 2-ethyl hexanoic acid and propylene oxide

(c) cyanopropyl polydimethyl siloxane copolymer The foam was prepared as in Comparative Test C.

The cream time was 12 seconds and the rise time was 150 seconds.

The density, hardness and resilience of the cured foam were determined. The hardness is the pressure required to obtain a CLD (Constant Load Deflection) at 40% compression (method described in DIN 53576). The resilience was determined by the ball rebound test of ASTMS D 3574 Test II. The results were:

| | |
|---|---|
| density | 37.8 kg/$m^3$ |
| hardness | 24.0 g/$cm^2$ |
| resilience | 57% |

A sample of foam was subjected to the smouldering test of BS 5852 Part 1 using an 80:20% weight viscose:cotton fabric. It passed the test.

Example 2

A foam was prepared as in Example 1 using the following formulation.

Formulation II

| | Parts by weight |
|---|---|
| Polyol (a) | 60.0 |
| Polyol (d) | 40.0 |
| $H_2O$ | 3.0 |
| Catalyst (b) | 1.0 |
| Triethanolamine | 1.0 |
| Silicone surfactant (c) | 0.8 |
| Trichlorofluoromethane | 10.0 |
| TDI 80:20 | 47.6 |

(d) polymer polyol (glycerol started EO capped polyether polyol OH No 34 grafted with acrylonitrile and styrene monomers).

Commercially available as Polyurax 14—03.

Polyol (a), catalyst (b) and surfactant (c) were as used in Example 1.

The following results were obtained:

| | |
|---|---|
| cream time | 18 secs |
| rise time | 90 secs |
| density | 24.8 $kg/m^3$ |
| hardness | 12 $g/cm^2$ |
| resilience | 55% |

A sample of the foam was subjected to a smouldering test as in Example 1. It passed.

Example 3

A polyurethane foam was prepared as in Example 1 using the following formulation.

Formulation III

| | Parts by weight |
|---|---|
| Polyol (a) | 60.0 |
| Polyol (d) | 40.0 |
| $H_2O$ | 2.5 |
| Catalyst | 1.0 |
| Trichlorofluoromethane | 10.0 |
| Silicone surfactant (c) | 0.8 |
| Isocyanate | 56 |
| glycerol | 0.5 |

The isocyanate was a blend of TDI 80 (see Comparative Test C) and polymethylene polyphenyl isocyanate in the weight ratio 80:20 (?)

The following results were obtained:

| | |
|---|---|
| cream time | 25 secs |
| rise time | 180 secs |
| density | 31—32 $kg/m^3$ |
| hardness | 28 $g/cm^2$ |
| resilience | 50—54 |

A sample of the foam tested as in Example 1 passed the smouldering test.

**Claims**

1. The process for the production of a high resilience polyurethane foam by the reaction of a polyol containing primary hydroxy groups and an isocyanate, containing a substantial proportion of isomers of toluene isocyanate, in the presence of water and a silicone surfactant which is carried out in the presence, as sole effective catalyst, of a quaternary ammonium carboxylate derivative of a trialkylamine quaternised by a hydroxyalkyl group.

2. The process according to claim 1 wherein the hydroxyalkyl group has the hydroxyl group on the beta position.

3. The process according to any one of the preceding claims wherein the carboxylate is derived from a carboxylic acid having 2 to 20 carbon atoms in the molecule.

4. The process according to claim 3 wherein the carboxylic acid is an alkanoic acid having 5 to 12 carbon atoms in the molecule.

5. The process according to any one of the preceding claims wherein the trialkylamine is trimethylamine.

6. The process according to any one of the preceding claims wherein the polyol is a polyether triol having an average primary hydroxyl content of at least 40% mole per cent and an average molecular weight from 2000 to 8000.

7. The process according to any one of the preceding claims wherein the isocyanate is at least 85% TDI.

8. The process according to any one of the preceding claims wherein the quantity of isocyanate used is such as to give an index in the range 110—140.

9. The process according to any one of the preceding claims characterised in that the polyol is a polyether polyol substantially free from dissolved or dispersed polyurea.

10. The process according to Claim 9 wherein the polyol includes a graft polyol.

**Revendications**

1. Le processus de production d'une mousse de polyuréthane de haute résilience par réaction d'un polyol contenant des groupes hydroxyles primaires et d'un isocyanate contenant une part importante d'isomères d'isocyanate de toluène, en présence d'eau et d'un surfactant silicone qui est effectué en présence, au titre de seul catalyseur actif, d'un carboxylate d'ammonium quaternaire dérivé d'un trialkylamine transformé en dérivé quaternaire par un groupe hydroxyalcoyle.

2. Le processus en vertu de la revendication 1 selon lequel le groupe hydroxyalcoyle comporte le groupe hydroxyle en position béta.

3. Le processus en vertu de l'une quelconque des revendications ci-dessus selon lequel le carboxylate est dérivé d'un acide carboxylique comptant de 2 à 20 atomes de carbone par molécule.

4. Le processus en vertu de la revendication 3 selon lequel l'acide carboxylique est un acide alcanoïque comptant de 5 à 12 atomes de carbone par molécule.

5. Le processus en vertu de l'une quelconque des revendications ci-dessus selon lequel le trialkylamine est une triméthylamine.

6. Le processus en vertu de l'une quelconque des revendications ci-dessus selon lequel le polyol est un triol de polyéther comptant une

teneur moyenne en hydroxyle primaire d'au moins 40% de molécules et un poids moléculaire moyen variant de 2 000 à 8 000.

7. Le processus en vertu de l'une quelconque des revendications ci-dessus selon lequel l'isocyanate compte au moins 85% de TDI.

8. Le processus en vertu de l'une quelconque des revendications ci-dessus selon lequel la quantité d'isocyanate utilisée permet d'obtenir un indice de l'ordre de 110 à 140.

9. Le processus en vertu de l'une quelconque des revendications ci-dessus caractérisé par le fait que le polyol est un polyol de polyéther exempt en majeure partie de polyurée en dissolution ou en dispersion.

10. Le processus en vertu de la revendication 9 selon lequel le polyol renferme un polyol greffé.

**Patentansprüche**

1. Verfahren zur Herstellung eines Polyurethanschaumes von hoher Elastizität durch die Reaktion eines primäre Hydroxy-Gruppen tragenden Polyols mit einem Isocyanat, des einen wesentlichen Anteil an Isomeren des Toluolisocyanats enthält, im Gegenwart von Wasser sowie einer Silicon enthaltenden oberflächenaktiven Substanz, wobei man als einziger wirksamer Katalysator ein quaternäres Ammoniumkarboxylatderivat eines durch eine Hydroxyalkyl-Gruppe quaternisierten Trialkylamin einsetzt.

2. Verfahren nach Patentanspruch 1, wobei die Hydroxy-Gruppe in der Hydroxyalkyl-Gruppe beta-ständig ist.

3. Verfahren nach einem der vorhergehenden Patentansprüche, wobei das Karboxylat Derivat einer 2-20 Kohlenstoffatome pro Molekül enthaltenden Carbonsäure ist.

4. Verfahren nach Patentanspruch 3, wobei die Carbonsäure eine Alkansäure ist, die 5—12 Kohlenstoffatome pro Molekül enthält.

5. Verfahren nach einem der vorhergehenden Patentansprüche, wobei das Trialkylamin ein Trimethylamin ist.

6. Verfahren nach einem der vorangehenden Patentansprüche, wobei der Polyol ein Polyäther-Triol ist meit einem durchschnittlichen primären Hydroxygehalt von mindestens 4+ Mol Prozent und einem durchschnittlichen Molekulargewicht von 2000 bis 8000.

7. Verfahren nach einem der vorhergehenden Patentansprüche, wobei das Isocyanat mindestens zu 85% aus TDI besteht.

8. Verfahren nach einem der vorhergehenden Patentansprüche, wobei die Menge des eingesetzten Isocyanats einen Index im Bereich von 110—140 ergibt.

9. Verfahren nach einem der vorhergehenden Patentansprüche, dadurch gekennzeichnet, daß der Polyol ein Polyäther-Polyol und praktisch frei von gelöstem bzw. dispergiertem Polyharnstoff ist.

10. Verfahren nach Patentanspruch 9, wobei der Polyol einen Propfpolyol enthält.